# EUROPEAN PATENT APPLICATION

(11) **EP 2 311 322 A2**
(43) Date of publication of application: **20.04.2011**
(21) Application number: 10382267.2
(22) Date of filing: 13.10.2010
(51) Int. Cl.: A01N 61/00, A01N 37/02, A01N 37/06, A01P 7/00

(54) **Use of spray oils of plant origin as insecticides against agricultural crop pests**

(30) Priority: 16.10.2009 ES 200930860
(71) Applicant: Repsol YPF, S.A., 28046 Madrid (ES)
(72) Inventor: Martin de las Heras, Silvia, 28046 Madrid (ES); Rojo Gonzalez, José, Carlos, 28046 Madrid (ES); Romero Palazon, Eduardo, 28046 Madrid (ES); Pizarro Gomez, Mª, Jesús, 28046 Madrid (ES)
(74) Representative: Pons Ariño, Angel

(57) **Abstract**

The present invention relates to the use as insecticide in plants of a composition comprising a mixture of fatty acid esters from different types of vegetable oils, characterized in that it contains at least one fatty acid methyl ester, preferably with a number of carbons between 14 and 24, an emulsifier and water. Said composition is preferably used against mites, aphids and scale insects and on agricultural crops, preferably fruit trees, vegetables, citrus fruit or vines.

## Description

The present invention relates to the use as insecticide of a composition comprising a mixture of fatty acid esters from different types of vegetable oils, characterized in that it contains at least one fatty acid methyl ester, preferably with a number of carbons between 14 and 24.

### PRIOR ART

Kerosene was the first mineral product used in modern times in pest control, so that in 1880 it was the standard product for aphids and other soft body insects (10 % emulsion), and also for other more resistant insects (25 % emulsion). The undistilled crude was already used in ancient Rome and although it was good for pest control, it caused serious damage to the tree, for which reason it was unsuccessful.

After 1905, spray oils arose that were safer for the plant but their use was displaced by calcium polysulphide. Around 1920, the use of the oils re-emerged and were effective with pests that were not affected by the polysulphide.

Currently, the substances used as spray oils are mineral oils mainly from distillates of virgin petroleums or highly paraffinic crudes or hydrotreated or hydrocracked bases.

The fact that the plant does not develop immunity to these substances, as happens with all chemical action insecticides, has meant that the spray oils maintain a market share which has served so that work is still carried out regarding how to achieve their greater effectiveness and that they have minimal environmental impact.

In generic terms, spray oils for agricultural use are used in two different ways with different functions in each case:
a) As adjuvants
   They are applied together with an active principle for pest control in crops. In these cases, the pesticide function is performed by the active principle, the spray oil being a support that facilitates the compound's activity. The field application is similar to how it is applied in emulsion.
b) In emulsion:
   They are applied in aqueous emulsion together with emulsifying agents.
   This type of substance is applied by emulsion of the spray oil (0.5 - 5 %) in water and sprayed on the plants, so that a few minutes after application the emulsion breaks up, with the leaf remaining covered by a thin layer of oil which acts on the pests present by a physical action which produces the insecticide action. Said physical action is called suffocation and is effective in all insect growth phases:
   - On eggs it interferes with air exchange for breathing
   - In red spider mites it obstructs the air intake to the trachea quickly choking the animal.
   - It has a repulsive effect that discourages whiteflies from laying eggs.

Furthermore, a certain interference with pest metabolism is not rejected.

Although these oils have a series of limitations among which we can highlight: the limited number of pests on which they are efficient, the phytotoxicity on some plant species and possible undetermined secondary effects, the fact that the plant does not develop immunity to these substances, as happens with all chemical action insecticides has meant that the spray oils maintain a market share which has served so that work is still carried out regarding how to achieve their greater effectiveness and that they have minimal environmental impact.

On the other hand, the search for renewable sources as raw materials of all productive process has meant that vegetable oils are perceived as a new source of raw materials.

Document ES2016692 discloses a pesticide composition that contains a mineral oil and a surfactant to form an emulsion in the presence of water. This document mentions that the mineral oil can be replaced by a vegetable oil, although they do not specify which. Vegetable oils have been traditionally used as spray oils in the State of the Art since they show great effectiveness against pests, although in general terms, they are more phytotoxic with the plant than mineral oils, since they are very heavy molecules.

Document US2006/008495 discloses a method for controlling insects, specifically mosquitoes, in stagnant waters comprising the use, among other ingredients, of a fatty acid ester from vegetable fatty acids of between 10 and 25 carbon atoms and a low molecular weight alcohol, to form an emulsion and apply that emulsion to form a film on water infested with insects. The principle of action may have certain similarities to that of insecticide oils in plants, although in this case the oil acts by trapping.

Therefore, it would be desirable to obtain insecticide compositions that do not have the disadvantages of mineral oils and which minimize the environmental impact on applying them in crops.

### DESCRIPTION OF THE INVENTION

The present invention discloses the use as insecticide of a composition comprising a mixture of fatty acid esters from vegetable oils, one or more emulsifiers and water, characterized in that it has a high efficiency without showing phytotoxicity.

A first aspect of the present invention relates to the use as insecticide of a composition comprising: a mixture of fatty acid esters from one or more vegetable oils, where said mixture contains at least one fatty acid methyl ester with a number of carbons between 14 and 24, an emulsifier and water.

The present invention claims a spray oil with less environmental impact than mineral oils (less persistence, more biodegradable) without a loss of effectiveness occurring compared with the mineral oils used to date as spray oil in the State of the Art.

One of those products derived from raw plant materials are fatty acid esters. They come from a transesterification process of a short chain linear alcohol (C₁ - C₅), preferably C₁ - C₂, more preferably C₁, with a fatty acid of a vegetable oil. These fatty acids have a chain length of C₁₀ to C₂₆, preferably C₁₄ to C₂₄, always with an even number of carbon atoms, the most frequent ones being palmitic (C₁₆), stearic (C₁₈), oleic (C₁₈) and linoleic (C₁₈). The type of fatty acid obtained depends on the vegetable oil it comes from.

The mixture of esters of the present invention may come from the transesterification of a mixture of vegetable oils or from the mixture of the esters of two or more transesterified oils separately.

The molecular structure of the fatty acid methyl esters from a transesterification process of a vegetable oil with a short chain alcohol, in particular methanol, makes them especially suitable for their use as spray oils. The present invention claims a spray oil of renewable source compared with the fossil origin of the mineral oils used to date as spray oils.

The fatty acid esters may be Fatty Acid Methyl Ester (FAME) or Fatty Acid Ethyl Ester (FAEE).

Preferably, the vegetable oil is selected from palm oil, sunflower oil, soy oil, corn oil, rapeseed oil, castor oil, coconut oil or peanut oil. The vegetable oils more preferably being soy oil, palm oil or sunflower oil, and even more preferably, any of the mixtures among them and of those oils with rapeseed oil.

In a preferred embodiment the mixture of fatty acid esters is in a proportion with respect to the composition between 0.5% and 3% by weight.

Of the more preferred vegetable oils, the main components of the oil depend on where they have been grown, the following concentrations indicated being for guidance, so palm oil has the main constituents: methyl myristate (1.25 %), methyl stearate (5 %), methyl palmitate (42.5 %), methyl oleate (40.5 %), methyl linoleate (9 %). And the main constituents of soy oil are: methyl palmitate (approx. 10.5 %), methyl oleate (approx 19.5 %), methyl linoleate (52.5 %), methyl linolenate (7.5 %) and methyl stearate (4 %).

The vegetable fatty acid esters comprised by the composition described in the present invention are smaller molecules than those typically contained in the vegetable oils used as insecticides, having the advantage that they maintain great effectiveness but without showing phytotoxicity.

The emulsifier used is preferably a fatty acid ester of polyglycol ester; more preferably it is a fatty acid ester of polyethylene glycol ester; and where more preferably the fatty acid is oleic. In another preferred embodiment, the emulsifier used is preferably a fatty acid ester of polyglycol polyether of a polyalcohol; more preferably it is an oleic acid ester of a polyethylene glycol ether of polyalcohol; even more preferably said polyalcohol is sorbitan; and where more preferably the fatty acid is oleic. Preferably said emulsifier is present in a proportion of 0.5 % to 9% with respect to the total weight of spray oil used.

This insecticide oil, as it is of plant origin, resolves some of the drawbacks of mineral oils, such as the risks for human health, their negative environmental consequences, such as the contamination of aquifers or soils, their high persistence and the lack of biodegradability, as well as possible damages in the crops depending on the application conditions.

The main advantages of this invention compared to the mineral oils currently used as spray oils are the following:
- Renewable origin
- Biodegradability over 90% compared to mineral oils that in the most favourable cases do not exceed 50%.
- Low persistence
- They reduce contamination
- They decrease the drift due to decreasing the number of drops less than 100 µm. Physical drift is the transfer of drops due to wind effect; chemical drift is that which occurs due to evaporation before reaching its target. Both are negative for the correct application of agricultural oil since it decreases the effective dose applied and contaminates the environment.
- Low toxicity for warm blooded animals
- Not toxic for fish, worms and daphnia.
- Slightly higher high flash point, which provides a greater margin of safety in handling the product.

The use of the aforementioned composition in a preferred embodiment is as an insecticide against mites, aphids and woodlice, preferably as an insecticide in plants and more preferably as an insecticide in agricultural crops, these agricultural crops being even more preferably fruit trees, and more preferably citrus fruit, vegetables or vines.

Throughout the description and the claims, the word "comprises" and their variants do not aim to exclude other technical characteristics, additives, components or steps. For persons skilled in the art, other objects, advantages, and characteristics of the invention shall be partly gathered from the description and partly from practice of the invention. The following examples and drawings are provided by way of illustration and do not aim to be limitative of the present invention.

### DESCRIPTION OF THE FIGURES

**Fig. 1****.** Phytotoxicity results of the products, number of leaves damaged on applying the palm FAME, soy FAME, Weichol, Enasol and Sunspray products at a concentration of 1% on cut twigs of adult orange trees. The photographs show an untreated leaf (a) and the phytotoxic effect that a product could cause on the leaves (b, c and d).
**Fig. 2****.** Results of effectiveness on applying soy FAME, Enasol E and Sunspray products on Tetranychus urticae mites.
**Fig. 3****.** Reduction of products not suitable for harvest depending on the suitable treatment.
**Fig. 4****.** Percentage of products not suitable for harvest depending on the various treatments
**Fig. 5****.** The photograph on the left shows the appearance after treatment with soy FAME and the right the inspection after 8 days.
**Fig. 6****.** The photograph on the left shows the treatment with soy FAME on pepper
**Fig. 7****.** Soy FAME on pepper: inspection after 8 days.
**Fig. 8****.** Results of effectiveness, count of individual invaders, of the soy FAME products in different doses, Enasol E and Arbofine on Panonychus citri mites in citrus fruit
**Fig. 9****.** Results of effectiveness, count of individual invaders, of the soy FAME products in different doses, and Sunspray on Tetranychus urticae mites in eggplant.
**Fig. 10****.** Results of effectiveness, count of individual invaders, of the soy FAME products in different doses, and Sunspray on Tetranychus urticae mites in water melon.

### EXAMPLES

Below, the invention will be illustrated by tests carried out by the inventors, which reveals the specificity and effectiveness of a composition comprising a mixture of fatty acid esters from vegetable oils, emulsifier and water, as insecticide as well as its little phototoxicity.

The following examples are made in comparison with the commercial spray oils called: Enasol, Banole 100 and Arbofine, which are summer insecticide oils, Sunspray Ultrafine, which is a narrow range insecticide oil, and Weichol (isopropyl oleate) which is a commercial product not used as spray oil.

### Example 1.

### Phytotoxicity test of soy and palm FAME comparing them with other insecticide oils with respect to Weichol and with respect to mineral oils such as Enasol and Sunspray Ultrafine.

The palm oil ester used in the present test has predominant chain lengths of 17 and 19 carbon atoms with the ester function in the first, showing a fewer number of unsaturations than the soy ester.

The soy oil used in the present test has a predominant length of 19 carbon atoms with the ester function in the first and a greater number of unsaturations than in the case of palm oil.

Weichol 60 is a commercial product, a fatty acid ester, mainly oleic, with isopropanol, for which reason it has an average chain of 30 carbon atoms with a small branching.

All products except Sunspray require an emulsifier in a proportion of 0.5% by weight with respect to the oil, of product 1% by weight thereof is added and the rest until 100% is water.

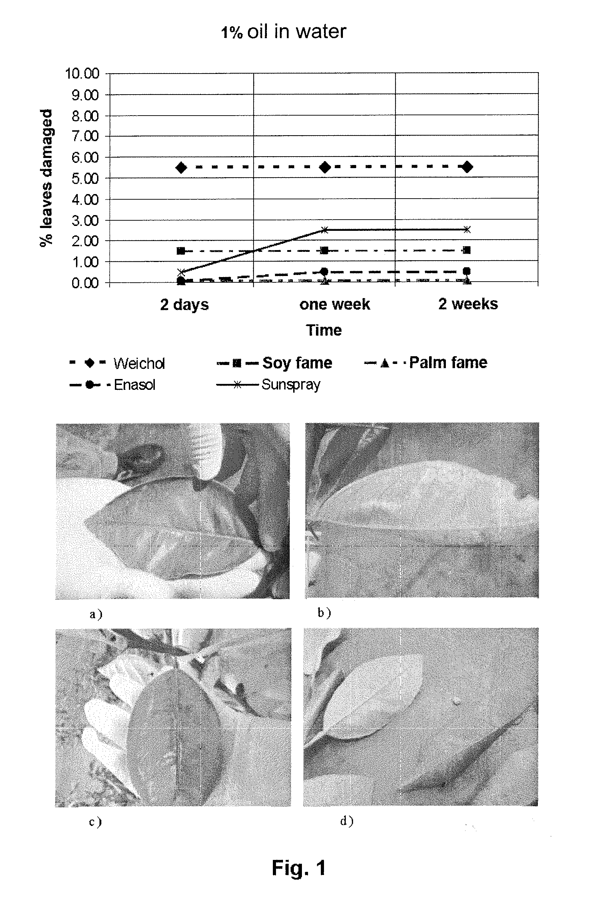

The application of said products have been carried out on cut twigs of adult orange trees, and the phytotoxic effects have been assessed two days, one week and two weeks after their application, observing over time the spots, the rolling of the leaves, etc. that their application has caused to them and it quantifies the number of leaves affected. It should be highlighted that twigs are used so as not to cause damage to a productive specimen, but that the twigs show greater sensitivity to the products applied as they do not have defence mechanisms (they have no roots). According to figure 1, the Enasol (mineral oil) and the palm FAME show no symptom of phytotoxicity, whilst the phytotoxicity shown by the soy FAME is negligible compared with the sensitivity of the twigs. The Sunspray shows phytotoxicity and the Weichol demonstrates being openly harmful for the plants, which confirms the claim that the fatty acid ester must come from a short chain linear alcohol.

The main effects observed are rolling of the leaves, spots on the central vein and spots on the underside of the leaves as observed in Fig. 1.

### Example 2.

### Assessment of the effectiveness of soy FAME in plaques of mites

Its efficacy was assessed comparing it to other products containing fatty acids of mineral origin such as Enasol E and Sunspray.

The test was performed with two doses, 0.5% and 1% of insecticide oil, with 0.5% of emulsifier with respect to the oil (except in the case of Sunspray) and the rest up to 100% of water. This test is carried out in the laboratory.

To assess the efficacy of these products on the Tetranychus urticae mite, a CEMS-3823 study was carried out, wherein bean disks of 2.4 cm in diameter are used on petri dishes (5 discs /dish) previously infested with mites (10 mites/disc). One dish was left untreated as a control. The dishes were sprayed with a Potter Tower, previously calibrated with an application broth equivalent to 199 1/ha. The test was kept at a temperature of 25±2°C, 60-90% of RH (relative humidity). The mortality of the mites was observed 24 and 48 hours after their application.

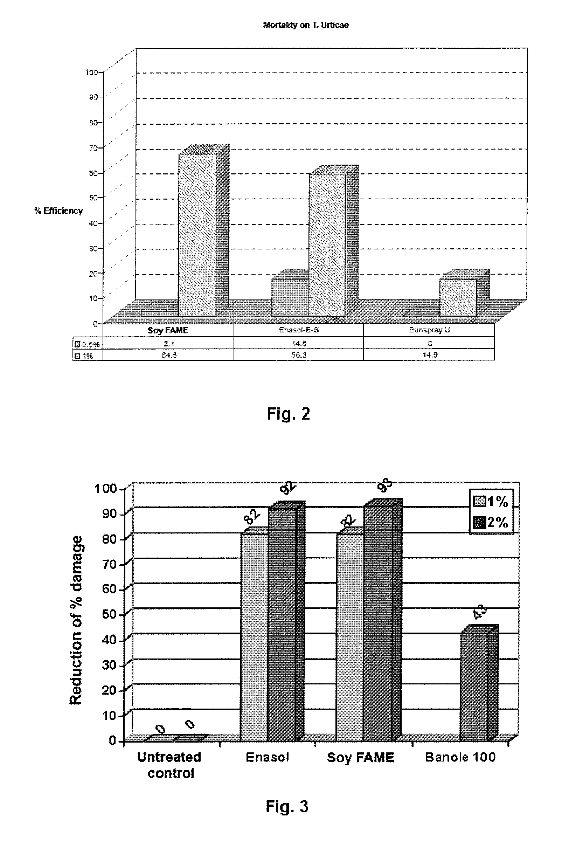

As observed in figure 2, greater efficacy is obtained in the elimination of the plague of mites with the soy FAME at a concentration of 1% as with any of the mineral oils (Enasol and Sunspray) at the same concentration, the efficacy of the Sunspray being really low.

### Example 3

### Assessment of the effectiveness of soy FAME in scale insect in citrus fruit

This assessment is carried out in the field on real pests.

The following products were tested: soy FAME, Enasol E and Banole 100. The test was performed with two doses, 1% and 2% of insecticide oil in an aqueous emulsion, with 0.5% of emulsifier with respect to the oil.

The test was performed on a plague of scale insect (orange scale) developed in a field of orange trees of the Navel Lane-Late variety with adult trees 8 years old.

The application (3 300 1/ha; 2 200 kPa gun) was performed at the start of the first generation of the plague of scale insect. The pest incidence was considered moderate with presence in outbreaks.

The first assessment was made in August at the start of the second generation to determine the incidence of damage to fruit, but the presence of pests was very minor and no differences were observed between the treated trees and untreated trees.

The second assessment was carried out at the start of the third generation of the pests (4 months later). On a sample of 100 fruit per crop, the percentage of fruit was evaluated with 0, 1-3, 4-10, 11-25, >25 individuals per fruit. The fruit not suitable for harvesting are those considered with more than 3 individuals per fruit. It is what is commercially identified as damage percentage.

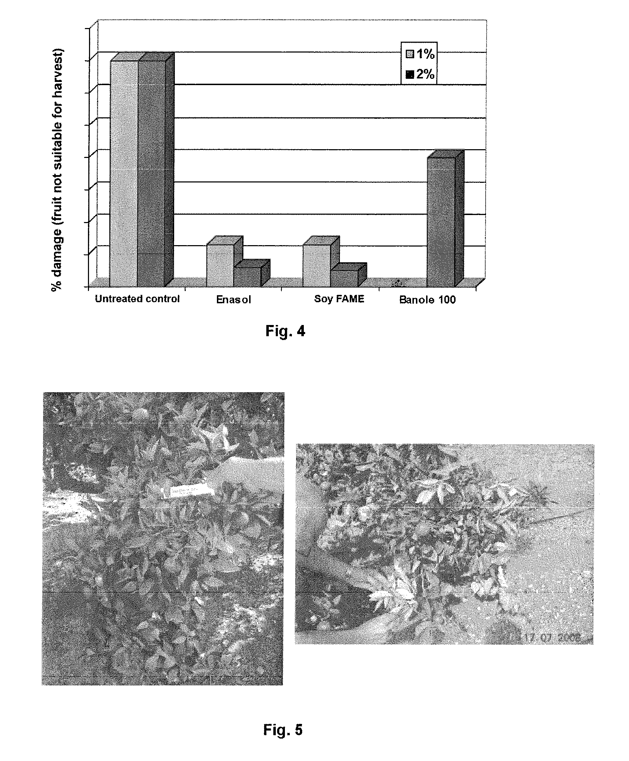

The results obtained are shown in figures 3 and 4. It is observed that much more advantageous results are obtained with soy FAME than with Banole 100 and similar to those obtained with Enasol, but it has the advantages compared with mineral oils that have previously been mentioned in depth.

### Example 4

### Assessment of the phytotoxicity of soy FAME in citrus fruit trees and vegetables

The phytotoxicity tests have been carried out with soy FAME in comparison with two commercial products: Enasol E and Banole 100.

The doses used in the test have been 1.5 % and 2.0 % in all cases. Tests have been carried out on young citrus fruit and on vegetables (tomato and pepper).

### The results obtained have been:

In citrus fruit no type of phytotoxicity has been observed due to application of the soy FAME. The results are even better than with the reference products (Enasol and Banole 100), with which slight spots appeared on the fruit which, in any case, disappear in a few weeks. Figure 5 shows some photographs of the test.

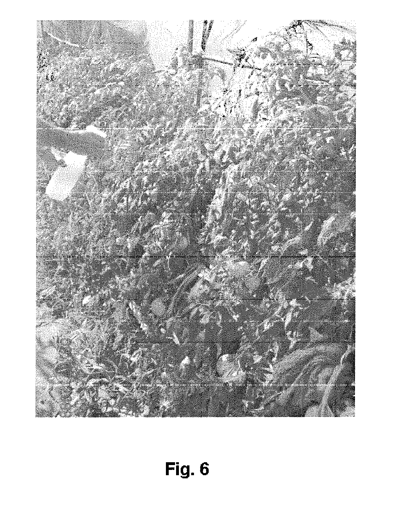

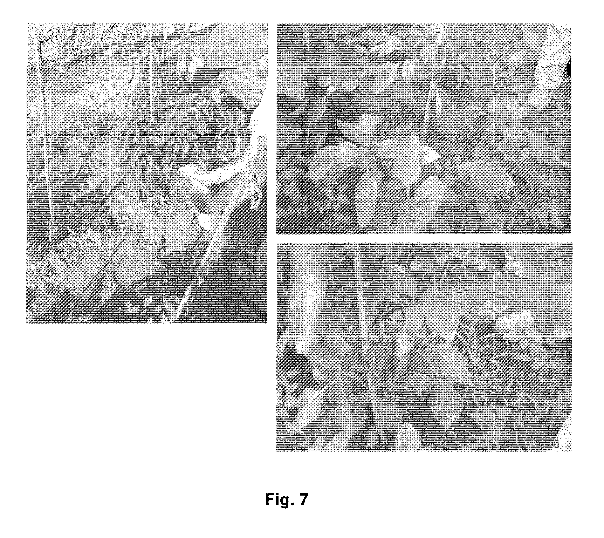

In vegetables the results were that in tomatoes no phytotoxicity appears, and in peppers slight marks appear on the leaves but never on the fruit. Figures 6 and 7 show some photographs of the test.

### Example 5

### Assessment of the effectiveness of soy FAME in plaques of mites in citrus fruit

This assessment is carried out in the field on a real plague of the Panonychus citri mite on orange trees of the variety Clemenvilla-Nova of three years of age.

The following products were tested: soy FAME, Enasol E and Arbofine. The test was performed with a dose of 0.5%, 1 % and 2% of soy FAME and with 2% of Enasol E and Arbofine, which is the recommended dose that appears on the container, in an aqueous emulsion. For soy FAME and Enasol, 0.5% of emulsifier with respect to the oil is applied in the emulsion preparation.

The application is performed on 2 000 I/ha and the pest incidence was evaluated by counting mites on a representative sample of leaves at the time of application, three days, one week and one month after applying the products.

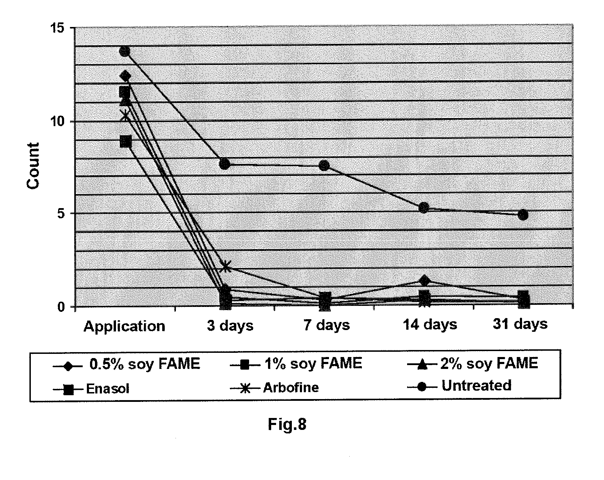

The results are shown in Fig. 8. All have a good mite killer action without showing phytotoxic effects, but the object of this invention also has the advantages compared with the mineral oils mentioned previously in depth.

### Example 6

### Assessment of the effectiveness of soy FAME in plaques of mites in egg plant and water melon

This assessment is carried out in the field on a real plague of the Tetranychus urticae mite on greenhouse crops: egg plant of the Long purple variety and water melon.

The following products were tested: soy FAME and Sunspray Ultrafine. The test was performed with doses of 0.5%, 1 % and 2% of soy FAME and with 1.5% of Sunspray Ultrafine, which is the recommended dose that appears on the container, in an aqueous emulsion. For soy FAME and Enasol, 0.5% of emulsifier with respect to the oil is applied in the emulsion preparation.

The application is performed on 700 l/ha and the pest incidence was evaluated by counting mites on a representative sample of leaves at the time of application, three days, one week and ten days after applying the products.

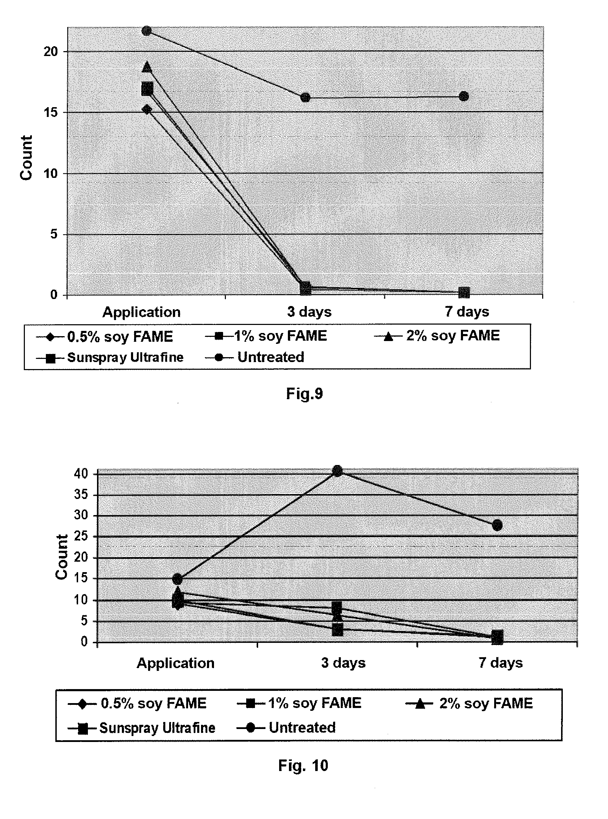

The results are shown in Fig. 9. All have a good mite killer action without showing phytotoxic effects, but the object of this invention also has the advantages compared with the mineral oils mentioned previously in depth.

## Claims

1. Use of a composition comprising:
a) a mixture of fatty acid esters from the transesterification of one or more vegetable oils and a short chain linear alcohol (C₁-C₅), where said mixture contains at least one fatty acid methyl ester with a number of carbons between 14 and 24,
b) one or more emulsifiers and
c) water,
as insecticide.

2. Use of the composition according to any of claims 1, where the vegetable oil is selected from palm oil, sunflower oil, soy oil, corn oil, rapeseed oil, castor oil, coconut oil or peanut oil.

3. Use of the composition according to claim 2, where the vegetable oil is soy oil, palm oil or sunflower oil.

4. Use of the composition according to any of claims 1 to 3, where the short chain linear alcohol is selected from the group comprising methanol and ethanol.

5. Use of the composition according to any of claims 1 to 4, where the short chain linear alcohol is methanol.

6. Use of the composition according to any of claims 1 to 3, where the mixture of fatty acid esters is in a proportion with respect to the composition of 0.5 % to 3% by weight.

7. Use of the composition according to any of claims 1 to 6, where the emulsifier is selected from a fatty acid ester of a polyglycol ester, a fatty acid ester of a polyethylene glycol ester, a fatty acid ester of a polyglycol polyether of a polyalcohol, a fatty acid ester of a polyethylene glycol polyether of a polyalcohol or combinations thereof.

8. Use of the composition according to claim 7, where the fatty acid is oleic acid.

9. Use of the composition according to claims 7 and 8, where the polyalcohol is sorbitan.

10. Use of the composition according to any of claims 1 to 9, where the emulsifier is in a proportion of 0.5 % to 9% with respect to the total weight of spray oil used.

11. Use of the composition according to claims 1 to 10, as insecticide against mites, aphids and scale insects.

12. Use of the composition according to any of claims 1 to 10, as insecticide in plants.

13. Use of the composition according to claim 12, as insecticide in agricultural crops.

14. Use according to claim 13, where the agricultural crops are fruit trees, vegetables, citrus fruit or vines.

15. Use according to claim 14, where the agricultural crops are citrus fruit.
